# NEUE EUROPÄISCHE PATENTSCHRIFT

(11) **EP 0 439 824 B2**
(45) Veröffentlichungstag und Bekanntmachung des Hinweises auf die Entscheidung über den Einspruch: **21.08.1996**
(45) Hinweis auf die Patenterteilung: 30.06.1993
(21) Anmeldenummer: 90125366.6
(22) Anmeldetag: 22.12.1990
(51) Int. Cl.: C04B 7/44

(54) **Verfahren und Anlage zur Wärmebehandlung von feinkörnigem Gut, insbesondere zur Herstellung von Zementklinker**
Process and installation for the heat treatment of fine-grain material, particularly for the production of cement clinker
Procédé et installation pour le traitement thermique de matériau à grain fin, en particulier pour la production de clinker de ciment

(30) Priorität: 30.01.1990 DE 4002553
(43) Veröffentlichungstag der Anmeldung: 07.08.1991
(73) Patentinhaber: Klöckner-Humboldt-Deutz Aktiengesellschaft, D-51149 Köln (DE)
(72) Erfinder: Bauer, Claus, W-5000 Köln 90 (DE)

(56) Entgegenhaltungen:
- AT-B- 378 170
- DD-B- 124 182
- DE-A- 2 637 330
- DE-A- 3 512 810
- DE-C- 2 736 607
- "Polysius teilt mit" Nr. 52, Okt. 1978, Herausgeber POLYSIUS AG Sonderdruck aus Zement-Kalk-Gips Nr. 9/1978, Seiten 428-432
- Zement-Kalk-Gips Nr. 3/1987, Seiten 127-129
- Zement-Kalk-Gips Nr. 5/1987, Seiten 243-249 und 255-258

## Beschreibung

Die Erfindung betrifft ein Verfahren zur Wärmebehandlung von feinkörnigem Gut, insbesondere zur Herstellung von Zementklinker, wobei das Gut zunächst in einer Vorwärmzone mit heißen Abgase vorgewärmt wird, das vorgewärmte Gut durch Zufuhr und Verbrennung von Abfallstoffen wie Altreifen weiter erhitzt und wenigstens teilweise calciniert wird und anschließend das Gut in der Sinterzone eines Drehrohrofens zu Zementklinker fertiggebrannt wird. Außerdem betrifft die Erfindung eine Anlage zur Durchführung des Verfahrens.

Bei der Herstellung von Zementklinker aus Zementrohmehl ist es bekannt, in die Einlaufkammer des Drehrohrofens, in welche das im Vorwärmer vorerhitzte Rohmehl eingeführt wird, auch Altreifen einzuführen. Durch die Verbrennung der Altreifen als Abfallbrennstoffsoll Wärmeenergie freigesetzt werden, durch welche das Zementrohmehl vor seiner Sinterung teilweise calciniert wird. Die Altreifenverbrennung im Drehrohrofen kann aber in der gesamten Zementklinkerproduktionslinie Schwierigkeiten bereiten. Die in die Einlaufkammer des Drehrohrofens intermittierend eingeworfenen Altreifen sollen im Drehrohrofen mit Sauerstoff verbrennen, der in einem Luftüberschuß an der Flamme des am gegenüberliegenden Drehofenende angeordneten Drehofenbrenners vorbeigeführt werden muß. Infolge des ungleichmäßigen Anbrennens und Ausbrennens der Reifen verbrennen diese ungleichmäßig schnell und zeitweilig auch unvollständig, so daß im Drehofenabgas zeitweilig starke CO-Bildung auftritt. Es ist auch häufig beobachtet worden, daß die CO-Stöße meßbar sind, obwohl gleichzeitig Sauerstoff in der Gasströmung vorliegt. Das läßt darauf schließen, daß der CO-Gehalt im Abgas in Strähnen im Abgas vorliegt, die sich nur langsam auflösen. Diese zeitweilig starken CO-Stöße im Drehofenabgas sind in Gasströmungsrichtung gesehen nach dem Vorwärmer feststellbar und sie müssen schon mit Rücksicht auf die Abgasreinigung, besonders wenn diese aus einem elektrostatischen Staubabscheider besteht, sowie vor allem auch aus Umweltschutzgründen vermieden werden. Zur Unterdrückung solcher CO-Stöße im Drehofenabgas ist bisher der Luftüberschuß am Drehofenbrenner erhöht worden. Dabei wird jedoch die Flammentemperatur des Drehofenbrenners herabgesetzt und die Drehofenabgasmenge sowie letztendlich der spezifische Wärmebedarf der Zementklinkerproduktionslinie steigen.

Der Erfindung liegt die Aufgabe zugrunde, bei der Herstellung von Zementklinker mit Altreifenverbrennung im Drehrohrofen die obengenannten Schwierigkeiten zu vermeiden, und zwar insbesondere die im Drehofenabgas zu messenden CO-Stöße zu minimieren, ohne den spezifischen Wärmebedarf der Zementklinkerproduktionslinie zu erhöhen.

Diese Aufgabe wird verfahrensmäßig mit den Maßnahmen des Kennzeichnungsteils des Anspruchs 1 und vorrichtungsmäßig mit den Maßnahmen des Kennzeichnungsteils des Anspruchs 8 gelöst.

Erfindungsgemäß werden die Altreifen im Drehrohrofen mit Sauerstoffüberschuß verbrannt, wodurch zunächst einmal die bisherfestgestellten CO-Stöße im Drehofenabgas vermieden werden. Der nach der Reifenverbrennung im Drehofenabgas vorliegende Sauerstoffüberschuß wird erfindungsgemäß in einer Zusatzbrennstufe zur Verbrennung zusätzlich zugeführten Brennstoffs jeglicher Art zur Steigerung des Calcinationsgrades des Zementrohmehles umgesetzt bzw. aufgezehrt. Das heißt die Zusatzbrennstufe, die zweckmäßigerweise als Brennstrecke in dervom Drehrohrofen zum Vorwärmer führenden Drehofenabgasleitung ausgebildet ist, kommt ohne Zuführung von Tertiärluft, d. h. ohne Anschluß an eine ansonsten übliche Tertiärluftleitung aus, wodurch auch erhebliche Investitionskosten eingespart sind. Das heißt der Sauerstoffüberschuß bei der Altreifenverbrennung wird so groß eingestellt, daß nach der Reifenverbrennung im Drehofenabgas ein Sauerstoffgehalt in einer Höhe vorliegt, die ausreicht, den Brennstoff der Zusatzbrennstufe, z. B. Kohlenstaub, Öl, Gas, vollständig zu verbrennen.

Der in der Zusatzbrennstufe verbrannte Brennstoff kann am Drehofenbrenner eingespart werden, so daß die Wärmewirtschaftlichkeit des erfindungsgemäßen Verfahrens trotz Einsatzes des Abfallbrennstoffes "Altreifen" hoch ist.

Das Drehofenabgas nach der Altreifenverbrennung und vor der Zusatzbrennstufe wird auf einen Sauerstoffgehalt von etwa 3 bis 4 % O₂ eingestellt. Damit ist bei der Reifenverbrennung stets genug O₂ vorhanden, so daß CO nicht entsteht. In der Zusatzbrennstufe (Brennstrecke in der Drehofenabgasleitung) wird soviel Zusatzbrennstoff (Kohlenstaub, Öl, Gas) verbrannt, daß sich nach der Zusatzbrennstufe ein Abgas ergibt, welches einen Sauerstoffgehalt von etwa 2 bis 3 % O₂ und einen Kohlenmonoxidgehalt von kleiner 0,05 % CO aufweist. Damit sind die bisher beobachteten CO-Stöße auf ein Minimum gesenkt.

Bei Ausfall der Altreifenverbrennung kann die Brennstoffzufuhr zur Zusatzbrennstufe erhöht und damit die ausgefallene Reifenfeuerung ausgeglichen werden, wodurch der Calcinationsgrad des Zementrohmehles erhalten bleiben kann. Gleichzeitig kann dadurch die dem Drehofenbrenner zugeführte Brennstoffmenge konstant gehalten werden, wodurch der Ofenbetrieb gleichmäßig erhalten bleibt. Die Brennstoffzufuhr zur Zusatzbrennstufe kann in Abhängigkeit der in den Drehofen eingeführten Altreifenmenge eingestellt werden.

Bei weiterer Optimierung des Verfahrens ist vorgesehen, den Zusatzbrennstoff mit Hilfe einer an der Anlage ermittelten Regelstrecke abhängig vom Zyklus der Reifenaufgabe elektronisch zu regeln bzw. bei sehr ungleichmäßigem Brennverhalten der sich im Rohmehlbett wälzenden Reifen kurzzeitig zu unterbrechen.

Besondere Eignung erfährt die Erfindung bei Zweistrangvorwärmer-Anlagen.

Bei einer Aufteilung der Drehofenabgase aufzwei parallele Stränge (sogenannte Zwillingsanlage), in deren gemeinsamen Drehrohrofen Altreifen verbrannt werden, können die beiden Drehofenabgaskanäle je eine Zusatzbrennstufe aufweisen, deren jeweilige Brennstoffzufuhr je nach örtlicher aktueller Drehofenabgasanalyse (O₂, CO) für sich geregelt wird. Auf diese Weise können beide Abgasstränge in ihrem nach der Zusatzbrennstufe gemessenen Gehalt an O₂ gleich eingestellt werden.

Die Erfindung und deren weitere Merkmale und Vorteile werden anhand der in den Figuren schematisch dargestellten Ausführungsbeispiele näher erläutert.

Es zeigt:
- Fig. 1: eine erfindungsgemäße Zementklinkerproduktionslinie mit Altreifenverbrennung und Zusatzbrennstufe als Einstranganlage,
- Fig. 2: ausschnittsweise schematisch eine Zweistrang anlage mit gemeinsamem Drehnohrofen und daran angeschlossenen parallelen Abgassträngen.

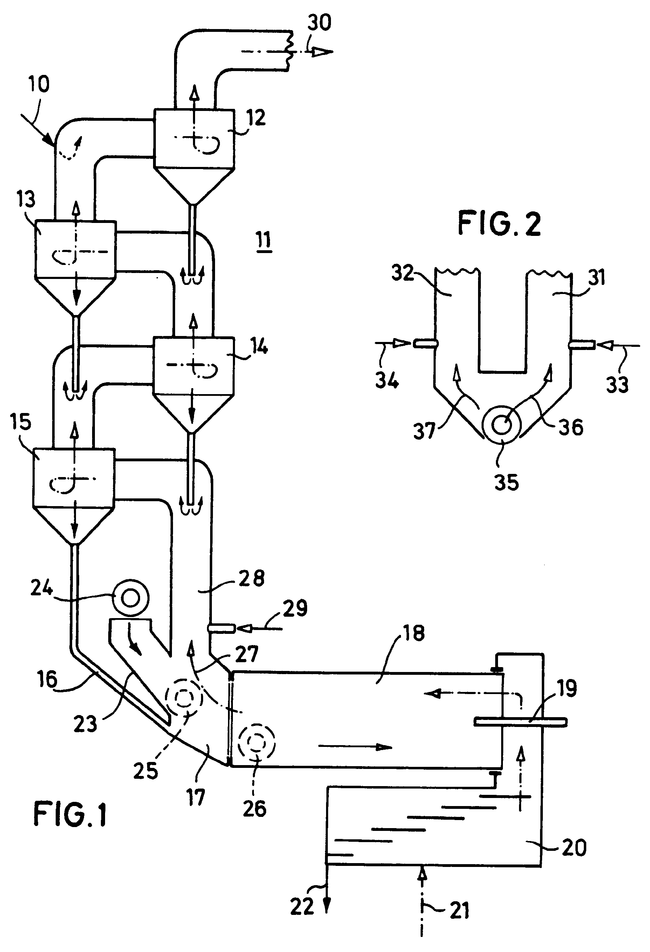

Nach Fig. 1 wird Zementrohmehl (10) in einem Vorwärmer (11), der mehrere Zyklonstufen in Serienschaltung (12 bis 15) aufweist, stufenweise vorerhitzt. Das vorerhitzte Zementrohmehl (16) wird in die Guteinlaufkammer (17) eines dem Vorwärmer (11) gutseitig nachgeschalteten Drehrohrofens (18) eingeführt. Am gegenüberliegenden Ende weist der Drehrohrofen (18) den Brenner (19) auf. Der in der Sinterzone des Drehofens (18) gebrannte Zementklinker wird im nachgeschalteten Klinkerkühler (20), z. B. einem Rostkühler, gekühlt. Mit (21) ist die Kühlluft des Klinkerkühlers und mit (22) ist der gekühlte Zementklinker angezeigt.

Die Guteinlaufkammer (17) des Drehrohrofens (18) weisteine Einrichtung (23) zur Einführung von Altreifen (24) auf. Die Altreifen (24) werden im Drehrohrofen (18) mit Sauerstoffüberschuß verbrannt, so daß sich ein Drehofenabgas (27) mit einem Sauerstoffgehalt von etwa 3 bis 4 % O₂ ergibt. Die den Drehrohrofen (18) abgasseitig mit dem Gutvorwärmer (11) verbindende Abgassteigleitung weist erfindungsgemäß eine Brennstrecke (28) für die Verbrennung von eingeführtem Zusatzbrennstoff (29) unterAusnutzung des im Drehofenabgas (27) enthaltenen Sauerstoffüberschusses auf. Vorzugsweise sind in der Brennstrecke (28) nicht dargestellte Verwirbelungseinbauten zur verbesserten Vermischung des Gases mit dem Brennstoff angeordnet. Der Zusatzbrennstoff (29), z. B. Kohlenstaub, wird der Brennstrecke (28) fein verteilt über den Strömungsquerschnitt aufgegeben und dem im Drehofenabgas (27) enthaltenen Sauerstoffzur Reaktion angeboten, ohne daß die sonst an dieser Stelle übliche Zuführung von Tertiärluft notwendig ist. Nach der in einem Temperaturbereich von ca. 800 bis 900° C erfolgenden Verbrennung des Zusatzbrennstoffes (29) in der Zusatzbrennstufe (28) weist das Abgas einen Sauerstoffgehalt von etwa 2 bis 3 % O₂ und einen Kohlenmonoxidgehalt von kleiner als 0,05% CO auf, d. h. das Abgas (30) enthält keine CO-Stöße mehr und es kann ohne weiteres ohne Gefahr in einem elektrostatischen Staubabscheider gereinigt werden. Durch die erfindungsgemäß eingesetzte Zusatzbrennstufe (29, 28) wird der Calcinationsgrad des Zementrohmehles bei minimalem Abgasmengenaufwand gesteigert, was gleichzeitig die hohe Wärmewirtschaftlichkeit des erfindungsgemäßen Verfahrens zur Folge hat, obwohl Altreifen als schwierig zu verbrennender Abfallbrennstoff genutzt werden.

In Fig. 2 wird schematisch verdeutlicht, daß bei einer Aufteilung der Drehofenabgase auf zwei parallele Stränge die beiden an einen gemeinsamen Drehrohrofen angeschlossenen Drehofenabgaskanäle (31, 32) je eine Zusatzbrennstufe aufweisen, deren jeweilige Brennstoffzufuhr (33 bzw. 34) je nach örtlicher aktueller Drehofenabgasanalyse für sich geregelt wird. Die Aufteilung des von der Verbrennung der Altreifen (35) ausgehenden Drehofenabgases auf die beiden Drehofenabgasstränge (31 und 32) kann nämlich ungleich bzw. unsymmetrisch sein. Weist z. B. der rechte Drehofenabgasanteil (36) einen vergleichsweise niedrigen O₂-Gehalt auf, so wird in der Zusatzbrennstufe vergleichsweise wenig Zusatzbrennstoff (33) verbrannt. Umgekehrt wird z. B. in der anderen Zusatzbrennstufe vergleichsweise viel Zusatzbrennstoff (34) verbrannt, wenn der linke Drehofenabgasteilstrom (37) einen höheren O₂-Gehalt aufweisen sollte. Das heißt, daß durch individuell geregelte Zusatzbrennstoffzufuhr (33 bzw. 34) beide Abgasstränge (31 und 32) nach Ausbrand des Zusatzbrennstoffes (33 bzw. 34) hinsichtlich der Abgasanalyse gleich eingestellt werden können, z. B. auf etwa 2 bis 3 % O₂.

Die Erfindung wird durch folgenden Vergleich von Abgasanalysen noch verdeutlicht:

| | Drehofenabgas nach Drehrohrofen (18) | Abgas nach unterstem Zyklon (15) |
|---|---|---|
| ohne Altreifenverbrennung | ca. 1 bis 2 % O₂ | ca. 2 bis 3 % 0₂ |
| | 0,05 % CO | 0,05 % CO |
| mit Altreifenverbren- | ca. 1 bis 2 % O₂ | ca. 2 bis 3 % 0₂ |
| | 0,2 bis 2 % CO ( zeitweiliger Stoß ) | 0,2 bis 2 % CO ( zeitweiliger Stoß ) |
| Erfindung, d. h. mit Altreifenverbrennung und mit Zusatzbrennstufe 28, 29 | 3 bis 4 % 0₂ | 2 bis 3 % 0₂ |
| | 0,1 % CO | 0,05 % CO |

Nach Fig. 1 kann das Gesamtwärmeangebot auf die drei Brennstellen der Zementklinkerproduktionslinie wie folgt verteilt sein:

| | |
|---|---|
| Drehofenbrenner 19 | 80% |
| Altreifenverbrennung | 10 % - 15 % |
| Zusatztbrennstufe 28, 29 | 5 % - 10 % |

## Patentansprüche

1. Verfahren zur Wärmebehandlung von feinkörnigem Gut, insbesondere zur Herstellung von Zementklinker, wobei das Gut zunächst in einer Vorwärmzone (11) mit heißen Abgasen vorgewärmt wird, das vorgewärmte Gut (16) durch Zufuhr und Verbrennung von Abfallstoffen wie Altreifen (24 bis 26) weiter erhitzt und wenigstens teilweise calciniert wird und anschließend das Gut in der Sinterzone eines Drehrohrofens (18) zu Zementklinker fertiggebrannt wird, dadurch gekennzeichnet, daß die Altreifen (24) im Drehrohrofen (18) mit Sauerstoffüberschuß verbrannt werden und daß der nach der Reifenverbrennung im Drehofenabgas (27) vorliegende Sauerstoffgehalt in einer Zusatzbrennstufe (28) zur Verbrennung zusätzlich zugeführten Brennstoffs (29) jeglicher Art zur Steigerung des Calcinationsgrades des Gutes umgesetzt wird.

2. Verfahren nach Anspruch 1, dadurch gekennzeichnet, daß das Drehofenabgas (27) nach der Altreifenverbrennung und vor der Zusatzbrennstufe (28) auf einen Sauerstoffgehalt von größer 3% O₂ eingestellt wird.

3. Verfahren nach Anspruch 1 oder 2, dadurch gekennzeichnet, daß das Abgas nach Verbrennung des Zusatzbrennstoffes (29) in der Zusatzbrennstufe (28) auf einen Sauerstoffgehalt von etwa 2 bis 3 % O₂ eingestellt wird.

4. Verfahren nach Anspruch 1, dadurch gekennzeichnet, daß die Menge des Zusatzbrennstoffs (29) in Abhängigkeit von der Altreifenmenge geregelt wird.

5. Verfahren nach einem der Ansprüche 1 bis 4, dadurch gekennzeichnet, daß bei Ausfall der Altreifenverbrennung die Brennstoffzufuhr zur Zusatzbrennstufe wärmemäßig äquivalent erhöht wird.

6. Verfahren nach einem der Ansprüche 1 bis 5, dadurch gekennzeichnet, daß entsprechend dem Aufgabezyklus der Altreifen (24) die Zuführung des Zusatzbrennstoffes (29) kurzfristig reduziert oder unterbrochen wird.

7. Verfahren nach einem der Ansprüche 1 bis 6, dadurch gekennzeichnet, daß bei einer Aufteilung der Drehofenabgase auf zwei parallele Zyklon-Vorwärmer-Stränge die beiden Drehofenabgaskanäle (31, 32) je eine Zusatzbrennstufe aufweisen, deren jeweilige Brennstoffzufuhr (33, 34) je nach örtlicher aktueller Drehofenabgasanalyse für sich geregelt wird.

8. Anlage zur Wärmebehandlung von feinkörnigem Gut, insbesondere zur Herstellung von Zementklinker, zur Durchführung des Verfahrens nach einem der Ansprüche 1 bis 7, mit einem Gutvorwärmer (11) und einem gutseitig nachgeschalteten Drehrohrofen (18), dessen Guteinlaufkammer (17) eine Einrichtung (23) zur Einführung von Abfallstoffen wie Altreifen (24) aufweist, dadurch gekennzeichnet, daß die den Drehrohrofen (18) abgasseitig mit dem Gutvorwärmer (11) verbindende Abgassteigleitung eine Brennstrecke (28) mit Verbrennung von Zusatzbrennstoff (29) unter Ausnutzung des im Drehofenabgas (27) enthaltenen Sauerstoffüberschusses aufweist.

## Claims

1. A method of heat-treating fine-grain material, more especially for producing cement clinker, which material is first heated by hot waste gases in a preheating zone (11), the preheated material (16) is additionally heated and at least partly calcined by supply and combustion of waste substances such as old tyres (24 to 26), and the material is then finally burnt into cement clinker in the sinter zone of a rotary kiln (18), characterised in that the old tyres (24) in the rotary kiln (18) are burnt in an excess of oxygen, and the oxygen in the waste gas (27) after burning the tyres is used in an additional burner stage (28) for burning additionally supplied fuel (29) of any kind in order to increase the degree of calcination of the material.

2. A method according to claim 1, characterised in that, after burning the old tyres and before reaching the additional burner stage (28), the waste gas (27) is adjusted to an oxygen content above 3% O₂.

3. A method according to claim 1 or 2, characterised in that, after burning the additional fuel (29), the waste gas in the additional burner stage (28) is adjusted to an oxygen content of about 2 to 3% O₂.

4. A method according to claim 1, characterised in that the amount of additional fuel (29) is adjusted in dependence on the amount of old tyres.

5. A method according to any of claims 1 to 4, characterised in that, when the burning of old tyres is interrupted, the fuel supply to the additional burner stage is increased to make up the heating.

6. A method according to any of claims 1 to 5, characterised in that the supply of additional fuel (29) is briefly reduced or stopped, corresponding to the delivery cycle of old tyres (24).

7. A method according to any of claims 1 to 6, characterised in that,when the waste gases are divided between two parallel cyclone preheater paths, the two waste-gas ducts (31, 32) each have an additional burner stage having respective fuel supplies (33, 34) which are individually adjusted depending on the local analysis of the waste gas.

8. An installation for heat treatment of fine-grain material, more especially for producing cement clinker, for working the method according to any of claims 1 to 7, comprising a preheater (11) and a rotary kiln (18) connected downstream on the material side and having a feed chamber (17) comprising a means (23) for introducing waste substances such as old tyres (24), characterised in that the rising waste-gas pipe connecting the rotary kiln (18) on the waste-gas side to the preheater (11) comprises a burner section (28) where additional fuel (29) is burnt using the excess oxygen in the waste gas (27).

## Revendications

1. Procédé pour le traitement thermique de matériau à grains fins, en particulier pour la production de clinker de ciment, dans lequel le matériau est d'abord préchauffé dans une zone de préchauffage (11) avec des gaz d'échappement chauds, le matériau préchauffé (16) est chauffé davantage par alimentation et combustion de matières de déchets telles que des vieux pneus (24 à 26), est au moins en partie calciné; ensuite le matériau est complètement brûlé dans la zone de frittage d'un four tubulaire tournant (18) pour obtenir un clinker de ciment, procédé caractérisé en ce que les vieux pneus (24) sont brûlés dans le four tournant (18) avec un excès d'oxygène et en ce que la teneur en oxygène existant après la combustion des pneus dans les gaz d'échappement du four tournant (27) est convertie dans un étage de combustion additionnel (28) servant à la combustion de combustible apporté en supplément (29) de n'importe quel type pour augmenter le degré de calcination du matériau.

2. Procédé selon la revendication 1, caractérisé en ce que les gaz d'échappement du four tournant (27) sont réglés après la combustion des vieux pneus et avant l'étage de combustion additionnel (28) sur une teneur en oxygène de plus de 3 % d'O₂.

3. Procédé selon la revendication 1 ou 2, caractérisé en ce que les gaz d'échappement après la combustion du combustible additionnel (29) dans l'étage de combustion additionnel (28) sont réglés sur une teneur en oxygène environ de 2 à 3 % d'O₂.

4. Procédé selon la revendication 1, caractérisé en ce que la quantité de combustible additionnel (29) est réglée en fonction de la quantité de vieux pneus.

5. Procédé selon l'une des revendications 1 à 4, caractérisé en ce que si la combustion des vieux pneus fait défaut, l'alimentation en combustible de l'étage de combustion additionnel est augmentée de façon équivalente.

6. Procédé selon l'une des revendications 1 à 5, caractérisé en ce que l'alimentation du combustible additionnel (29) est réduite ou interrompue brièvement en fonction du cycle de fourniture des vieux pneus (24).

7. Procédé selon l'une des revendications 1 à 6, caractérisé en ce que, dans le cas d'une division des gaz d'échappement du four tournant en deux lignes parallèles de cyclones et préchauffeur, les deux canaux de gaz d'échappement du four tournant (31, 32) présentent chacun un étage additionnel de combustion, dont l'alimentation en combustible correspondante (33, 34) est réglée individuellement selon l'analyse des gaz d'échappement du four tournant effectuée localement en temps réel.

8. Installation pour le traitement thermique de matériau à grains fins, en particulier pour la production de clinker de ciment, pour la mise en oeuvre du procédé selon l'une des revendications 1 à 7, avec un préchauffeur du matériau (11) et un four tournant tubulaire (18) monté en aval du côté du matériau, dont la chambre d'admission du matériau (17) présente un dispositif (23) parl'introduction de matières de déchets telles que des vieux pneus (24), installation caractérisée en ce que la conduite montante des gaz d'échappement reliant le four tubulaire tournant (18) du côté des gaz d'échappement au préchauffeur du matériau (11) présente un chemin de combustion (28) avec combustion de combustible additionnel (29) en utilisant l'excès d'oxygène contenu dans les gaz d'échappement du four tournant (27).
